# EUROPEAN PATENT SPECIFICATION

(11) **EP 3 243 088 B1**
(45) Date of publication and mention of the grant of the patent: **30.12.2020**
(21) Application number: 16773789.9
(22) Date of filing: 24.03.2016
(51) Int. Cl.: G01S 19/41

(54) **AUTOMOTIVE AD HOC REAL TIME KINEMATICS ROVING NETWORK**
AUTOMOBILES AD-HOC ECHTZEITKINEMATIK ROVING NETZWERK
RÉSEAU ITINÉRANT CINÉMATIQUE TEMPS RÉEL AD HOC DE VÉHICULES AUTOMOBILES

(30) Priority: 31.03.2015 US 201514674836
(43) Date of publication of application: 15.11.2017
(73) Proprietor: Veoneer US, Inc., Southfield, MI 48034 (US)
(72) Inventor: JORDAN, David, Danville, New Hampshire 03819 (US)
(74) Representative: Mewburn Ellis LLP
(86) International application number: PCT/US2016/023949
(87) International publication number: WO 2016/160497

(56) References cited:
- DE-A1-102013 001 120
- US-A- 6 018 818
- US-A- 6 111 541
- US-A1- 2004 119 638
- US-A1- 2011 039 578
- US-A1- 2011 181 465
- US-B1- 6 415 229

## Description

### Field of the Invention

The present invention relates to global positioning systems (GPS) generally and, more particularly, to a method and/or apparatus for implementing an automotive ad hoc real time kinematics roving network in a GPS system.

### Background of the Invention

Conventional GPS systems commonly use real-time kinematics (RTK) to provide fixed land-based reference stations. Conventional systems use expensive sensors to improve accuracy of standard GPS. Such systems are useful for providing centimetre level accuracy in agriculture applications and land survey applications. Conventional automotive Global Navigational Satellite System (GNSS) receivers employ position solutions with senor-based dead reckoning to maintain up to 5 meter accuracy in open sky conditions. Next-generation automotive position solutions will likely need greater accuracy in order to safely detect lanes and/or to support autonomous driving. Conventional systems do not support the accuracy needed for safe and widespread use of next-generation automotive positioning systems.

It would be desirable to implement an automotive ad hoc real time kinematics roving network to augment the accuracy of a GPS system.

Related GPS systems are disclosed in DE 102013001120 A1, US 6,415,229 B1 and US 6,018,818 A.

### Summary of the Invention

The present invention concerns an apparatus for determining a position of a vehicle as set forth in the claims appended hereto

In some embodiments of the apparatus aspect described above, the quality check comprises checking a location of the reference device and a time since an update of the correction value. In some embodiments implementing checking a location of the reference device and a time since an update of the correction value, the apparatus uses the correction value when the location is less than a minimum allowed distance. In some embodiments implementing checking a location of the reference device and a time since an update of the correction value, the apparatus uses the correction value when the time since the update of the correction value is below a pre-determined threshold.

In some embodiments of the apparatus aspect described above, the local conditions comprise at least one of noise and ionospheric interference.

In some embodiments of the apparatus aspect described above, the apparatus is located in a vehicle.

In some embodiments of the apparatus aspect described above, the reference device is located in a parked vehicle.

In some embodiments of the apparatus aspect described above, the reference device is located in an idling vehicle.

In some embodiments of the apparatus aspect described above, the reference device is located in a land-based station.

In some embodiments of the apparatus aspect described above, the correction value is an improvement to GPS data received from the GPS satellite.

In some embodiments of the apparatus aspect described above, the apparatus continues to use GPS data received from the GPS satellite if the correction value fails the quality check.

In some embodiments of the apparatus aspect described above, the apparatus is configured to (i) perform functionality of the reference device in a first mode and (ii) determine position data in a second mode. In some embodiments implementing the apparatus performing functionality of the reference device in a first mode and determining position data in a second mode, the functionality of the reference device comprises calculating the correction value for other of the apparatus on the network. In some embodiments implementing the apparatus performing functionality of the reference device in a first mode and determining position data in a second mode, the position data is based on the connection to the GPS satellite and the correction value.

In some embodiments of the apparatus aspect described above, the correction value implements a real-time accuracy correction for vehicle positioning.

The objects, features and advantages of the present invention include providing a GPS system that may (i) implement an ad hoc real time kinematics roving network, (ii) be used in a vehicle, (iii) improve accuracy by adding to the number of available base stations, (iv) use parked cars as ad-hoc base stations and/or (v) provide quality analysis of correction data.

### Brief Description of the Drawings

These and other objects, features and advantages of the present invention will be apparent from the following detailed description and the appended claims and drawings in which:
FIG. 1 is a diagram illustrating a context of the present invention;
FIG. 2 is a diagram of a module;
FIG. 3 is a flow diagram illustrating an operation of a correction portion of the module;
FIG. 4 is a flow diagram illustrating an operation of a calculation portion of the module;
FIG. 5 is a flow diagram illustrating an operation of a network connection portion of the module; and
FIG. 6 is a flow diagram illustrating a calculation of a correction value.

### Detailed Description of the Preferred Embodiments

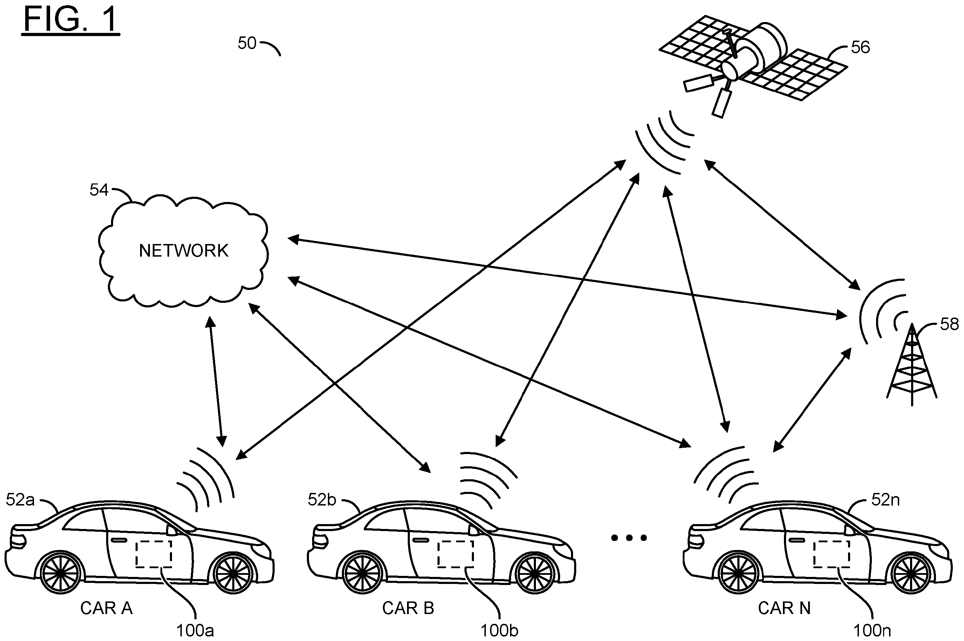

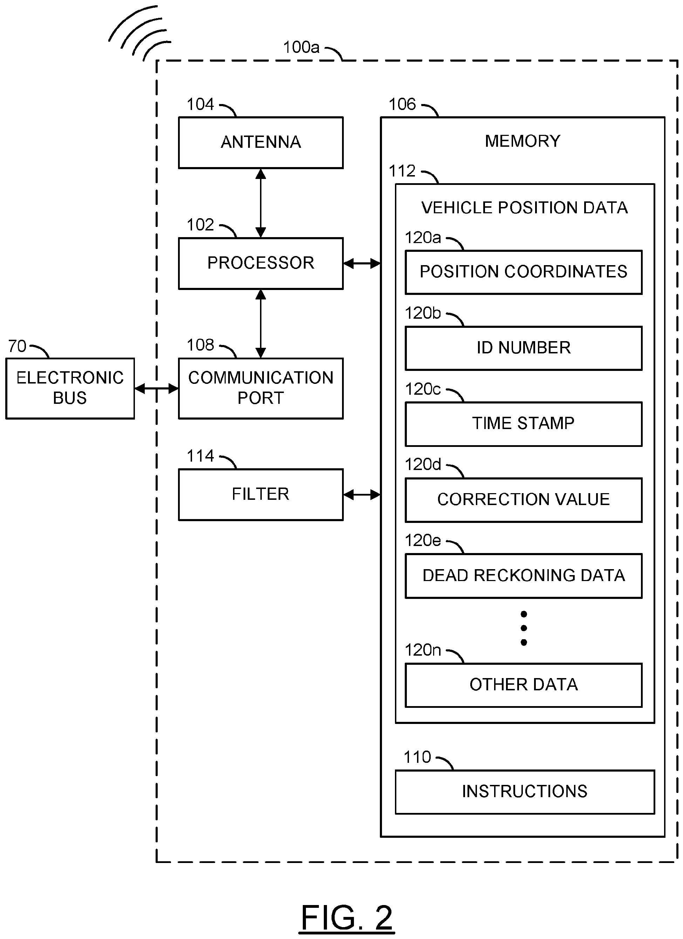

Referring to FIG. 1, a block diagram of a system 50 is shown in accordance with an embodiment of the invention. The system 50 generally comprises a number of vehicles 52a-52n, a network 54, a satellite 56, and a base station 58. Each of the vehicles 52a-52n comprise at least one of a number of apparatus 100a-100n. For example, the vehicle 52a comprises the apparatus 100a. The apparatus 100a is described in more detail in connection with FIG. 2.

The apparatus 100a may connect to both the network 54 and/or the satellite 56. The connection to the network 54 maybe implemented through a cellular network connection (e.g., 3G, 4G LTE, etc.), a Wi-Fi connection and/or another type of connection. The connection to the satellite 56 may be implemented through a GPS-type connection. The connection to the network 54 may allow the apparatus 100a to receive information, such as a correction value, from a reference device (e.g., one or more of the apparatus 100b-100n operating in a reference device mode, the base station 58, etc.).

The connection to the network 54 may also allow a connection to the base station 58. In general, the base station 58 may be implemented as a fixed based station, such as a cellular tower, a user installed fixed base station, or another type of fixed base station.

The apparatus 100a may receive enhancement information (e.g., a correction value) from the base station 58. If the base station 58 is not within a usable range of the apparatus 100a (e.g., the base station is beyond a distance of 25km, the correction value does not pass a quality and/or reliability check, etc.), a search for a number of the apparatus 100b-100n may be made. If the available apparatus 100b-100n are within the useable range (e.g., the correction values does pass the quality and/or reliability check, the base station 58 is too far away, the signal from the base station 58 has too much interference, etc.), and the available apparatus 100b-100n are currently not moving (e.g., are operating in a reference device mode), then the correction value previously used by the apparatus 100b-100n may be used as enhancement data (e.g., the correction value) by the apparatus 100a. In some embodiments, the apparatus 100b-100n (e.g., the reference device(s)) may calculate the correction value based on vehicle position data from the apparatus 100a.

Reusing the correction value from the reference device and/or having the reference device calculate a new correction value for the apparatus 100a may decrease an amount of time spent by the apparatus 100a to determine and/or apply the correction value in order to increase the accuracy of the position data determined by the apparatus 100a. For example, an amount of time spent processing and/or an amount of power consumed for processing by the apparatus 100a may be reduced. In another example, the apparatus 100a may be unable to perform a calculation while in motion. Actively determining a position of the vehicle 52a and the correction value may be used to determine the position of the vehicle 52a.

In some embodiments, the vehicle 52a may be in motion and may connect to the network 54 to retrieve the correction value from one or more of the reference devices. The reference device(s) may be one or more of the vehicles 52b-52n and/or the base station 58 (e.g., a stationary device). For example, the vehicles 52a-52n may be one of the reference devices when stationary (e.g., parked and/or idling). In another example, the vehicles 52a-52n may not be one of the reference devices when in motion. When the reference device is the base station 58 in the usable range, the correction value may be assumed to be accurate (e.g., the correction value may be assumed to have passed the quality check). The number and/or types of reference devices may be varied according to the design criteria of a particular implementation.

The modules 100a-100n are shown located in the respective vehicles 52a-52n. The modules 100a-100n may be implemented as a single unit (e.g., an installed device and/or module) and/or a distributed unit. For example, various components of the modules 100a-100n may be implemented at various locations in and/or on the vehicles 52a-52n and connected by an electronic network connecting one or more of the components enabling a sharing of information in the form of digital signals (e.g., a serial bus, an electronic bus connected by wiring and/or interfaces, a wireless interface, etc.). In some embodiments, the modules 100a-100n may be implemented in an infotainment module of the vehicles 100a-100n. The location of the modules 100a-100n in and/or on the vehicles 52a-52n may be varied according to the design criteria of a particular implementation.

Referring to FIG. 2, a diagram of the apparatus (or module) 100a is shown. The apparatus 100a generally comprises a block (or circuit) 102, a block (or circuit) 104, a block (or circuit) 106 and/or a block (or circuit) 108. The circuit 102 may implement a processor. The circuit 104 may implement an antenna. The circuit 106 may implement a memory. The circuit 108 may implement a communication port. Other blocks (or circuits) may be implemented (e.g., a clock circuit, I/O ports, power connectors, etc.). For example, a block (or circuit) 114 is shown implementing a filter.

The processor 102 may be configured to execute stored computer readable instructions (e.g., instructions 110 stored in the memory 106). The processor 102 may perform one or more steps based on the stored instructions 110. For example, one of the steps executed/performed by the processor 102 may locate one of the reference devices (e.g., one of the modules 100a-100n) connected to the network 54. In another example, one of the steps executed/performed by the processor 102 may determine whether the correction value passes the quality check. In yet another example, one of the steps executed/performed by the processor 102 may use the correction value to compensate for local conditions when connected to the GPS satellite 56. The instructions executed and/or the order of the instructions performed by the processor 102 may be varied according to the design criteria of a particular implementation. The processor 102 is shown sending data to and/or receiving data from the antenna 104, the memory 106 and/or the communication port 108.

The antenna 104 may be implemented as a dual band antenna capable of connecting to both a cellular network (e.g., the network 54) and/or a GPS network (e.g., the satellite 56). In another example, the antenna 104 may be implemented as two antennas. For example, one antenna may be specifically designed to connect to the network 54, while another antenna may be implemented as being optimized to connect to the GPS network 56. The antenna 104 may be implemented as discrete antenna modules and/or a dual band antenna module.

The memory 106 may comprise a block 110 and a block 112. The block 110 may store the computer readable instructions (e.g., the instructions readable by the processor 102). The block 112 may store vehicle position data. For example, the vehicle position data 112 may store various data sets 120a-120n. Examples of the data sets may be position coordinates 120a, an ID number 120b, a time stamp 120c, a correction value 120d, dead reckoning data 120e and/or other data 120n.

The position coordinates 120a may store position data retrieved by the module 100a from the GPS satellite 56. The GPS satellite 56 may provide a particular resolution of position data accuracy. In some embodiments, the position coordinates 120a may not provide sufficient accuracy for particular applications (e.g., lane detection, autonomous driving, etc.). The enhancement data may improve the accuracy of the position coordinates 120a. When one of the vehicles 52a-52n is stationary (e.g., acting as one of the reference devices), the position coordinates 120a may be used to determine a distance between the one or more modules 100a-100n. In some embodiments, the position coordinates 120a may be calculated by the filter 114.

The ID number 120b may be used to determine an identity of the vehicles 52a-52n in the network 54. The ID number 120b may provide an identification system for each of the vehicles 52a-52n. For example, the ID number 120b may allow each of the modules 100a-100n know which module to communicate to/from.

The time stamp 120c may be used to determine an age of the vehicle position data 112. For example, the time stamp 120c may be used to determine if the vehicle position data 112 should be considered reliable or unreliable. The time stamp 120c may be updated when the modules 100a-100n update the vehicle position data 112. For example, the time stamp 120c may record a time in Coordinated Universal Time (UTC) and/or in a local time. The implementation of the time stamp 120c may be varied according to the design criteria of a particular implementation.

The correction value 120d may be used to augment (e.g., improve) a precision of the position coordinates 120a. The correction data 120d may implement real-time accuracy correction for the position coordinates 120a. The correction data 120d may be used to account (e.g., compensate) for location conditions that may affect an accuracy of the position coordinates 120a.

The dead reckoning data 120e may be used to store past and/or present information to determine a location traveled by the vehicle 52a. For example, the dead reckoning data 120e may store a previously determined position of the vehicles 52a (e.g., estimated speed, estimated time of travel, estimated location, etc.). The previously determined position may be used to help determine a current position of the vehicle 52a. The implementation and/or the information stored to determine the dead reckoning data 120e may be varied according to the design criteria of a particular implementation.

The communication port 108 may allow the module 100a to communicate with external devices and/or modules. For example, the module 100a is shown connected to an external electronic bus 70. In some embodiments, the electronic bus 70 may be implemented as a vehicle controller area network (CAN) bus. The electronic bus 70 may be implemented as an electronic wired network and/or a wireless network. Generally, the electronic bus 70 may connect one or more component enabling a sharing of information in the form of digital signals (e.g., a serial bus, an electronic bus connected by wiring and/or interfaces, a wireless interface, etc.). The communication port 108 may allow the module 100a to share the vehicle position data 112 with various infrastructure of the vehicle 52a. For example, information from the module 100a may be communicated to an infotainment device for display to a driver. In another example, a wireless connection (e.g., Wi-fi, Bluetooth, cellular, etc.) to a portable computing device (e.g., a smartphone, a tablet computer, a notebook computer, a smart watch, etc.) may allow information from the module 100a to be displayed to a user. A method of communication and/or the type of data transmitted may be varied according to the design criteria of a particular implementation.

The filter 114 may be configured to perform a linear quadratic estimation. For example, the filter 114 may implement a Kalman filter. Generally, the filter 114 may operate recursively on input data to produce a statistically optimal estimate. For example, the filter 114 may be used to calculate the position coordinates 120a and/or estimate the accuracy of the position coordinates 120a. In some embodiments, the filter 114 may be implemented as a separate module. In some embodiments, the filter 114 may be implemented as part of the stored instructions 110. The implementation of the filter 114 may be varied according to the design criteria of a particular implementation.

The local conditions may be any type of interference and/or factor that may affect a determination of the position coordinates 120a. The local conditions may reduce a reliability of the position coordinates 120a. For example, the local conditions may be due to ionospheric interference, noise, signal degradation caused by dense urban areas, signal degradation caused by tall buildings, etc. The type and/or cause of the local conditions may be varied according to the design criteria of a particular implementation.

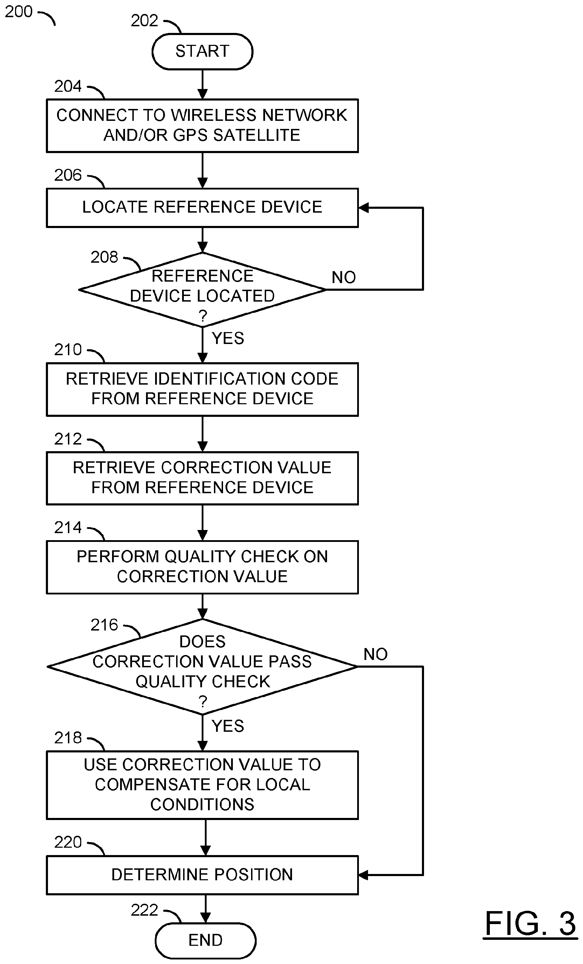

Referring to FIG. 3, a method (or process) 200 is shown. The method 200 may be an operation of a correction portion of the module 100. The method 200 generally comprises a step (or state) 202, a step (or state) 204, a step (or state) 206, a decision step (or state) 208, a step (or state) 210, a step (or state) 212, a step (or state) 214, a decision step (or state) 216, a step (or state) 218, a step (or state) 220, and a step (or state) 222.

The step 202 may be a start step for the method 200. The step 204 may connect to the wireless network 54 and/or the GPS satellite 56. Next, the step 206 may locate the reference device (e.g., a stationary one of the modules 100a-100n and/or the base station 58). Next, the decision step 208 determines if the reference device has been located (e.g., a stationary one of the modules 100a-100n and/or the base station 58 is in range). If not, the method 200 moves back to the step 206. If so, the method 200 moves to the step 210.

The step 210 may retrieve an identification code from the reference device (e.g., the ID number 120b). Next, the step 212 may retrieve the correction value 120d from the reference device. Next, the step 214 performs the quality check on the retrieved correction value 120d.

Next, the decision step 216 determines if the correction value passes the quality check. If not, the method 200 moves to the step 220 (e.g., to publish GPS data without a correction value 120d and mark the GPS data as not corrected based on a value of a corrected flag). If so, the method 200 moves to the step 218. The step 218 uses the correction value to compensate for the local conditions. Next, the step 220 determines a position of the vehicle 52 (e.g., based on the stored position coordinates 120a and/or the correction value 120d). Next, the step 222 ends the method 200.

The quality check for the correction value 120d maybe based on the vehicle position data 112 provided by the reference device. In some embodiments, the module 100 may connect to the fixed base station 58. Position data from the fixed base station 58 may be assumed to be correct (e.g., passes the quality check). In some embodiments, the module 100a may connect to another of the modules 100b-100n in the vehicles 52b-52n operating in the reference device mode. The module 100a may check the vehicle position data 112 (e.g., perform the quality check) from the other modules 100b-100n. For example, the quality check may be based on a minimum allowed distance (e.g., the position coordinates 120a) of the module 100a to the other modules 100b-100n. In another example, the quality check may be based on the time stamp 100c of the other modules 100b-100n. If the time stamp 100c is older than a pre-determined threshold, the correction data 120d provided by the other modules 100b-100n may be too old (e.g., considered unreliable) for use. The types of data checked and/or the thresholds used to determine whether the data passes the quality check may be varied according to the design criteria of a particular implementation.

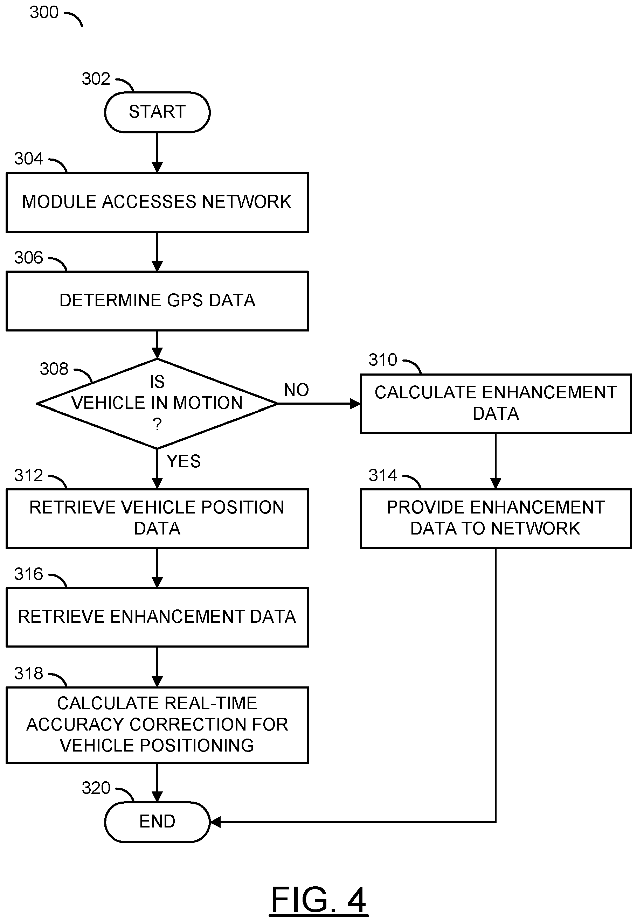

Referring to FIG. 4, a method (or process) 300 is shown. The method 300 may be an operation of a calculation portion of the module 100. The method 300 generally comprises a step (or state) 302, a step (or state) 304, a step (or state) 306, a decision step (or state) 308, a step (or state) 310, a step (or state) 312, a step (or state) 314, a step (or state) 316, a step (or state) 318, and a step (or state) 320. The step 302 may be a start step for the method 300. The step 304 may allow the module 100 to access the network 54. Next, the step 306 may determine GPS data (e.g., from the GPS satellite 58). Next, the decision step 308 may determine if the vehicle 52 is in motion.

If the decision step 308 determines the vehicle 52 is not in motion, the method 300 moves to the state 310. The state 310 may calculate the enhancement data (e.g., the correction value 120d). Next, the step 314 provides the enhancement data to the network 54. The method 300 then moves to the step 320, which ends the method 300. If the decision step 308 determines the vehicle is in motion, the method 300 moves to the step 312. The step 312 retrieves the vehicle position data (e.g., the position coordinates 120a). Next, the step 316 retrieves the enhancement data 120d. Next, the step 318 calculates real-time accuracy correction for vehicle positioning (e.g., to improve the accuracy of the vehicle position data 112). Next, the method 300 may move to the end step 320.

The modules 100a-100n may be configured to calculate position data (e.g., a position of the respective vehicles 52a-52n). The calculation of the position data may be based on the position coordinates 120a and/or the correction value 120d. The processor 102 may be configured to perform calculations to determine the position data. For example, the antenna 104 may be configured to connect to more than one GPS satellite. In another example, the modules 100a-100n may implement separate antennas to connect to multiple GPS satellites. The antenna 104 may receive data from the GPS satellites and a calculation may be performed to determine the position coordinates 120a. Interference due to the local conditions may be estimated. The correction value 120d may be used to cancel out the estimated interference due to the local conditions. In some embodiments, enhancement data from multiple reference devices may be checked. The modules 100a-100n may test the various enhancement data received and determine a most accurate estimation. The enhancement data determined to be the most accurate may be used as the correction value 120d.

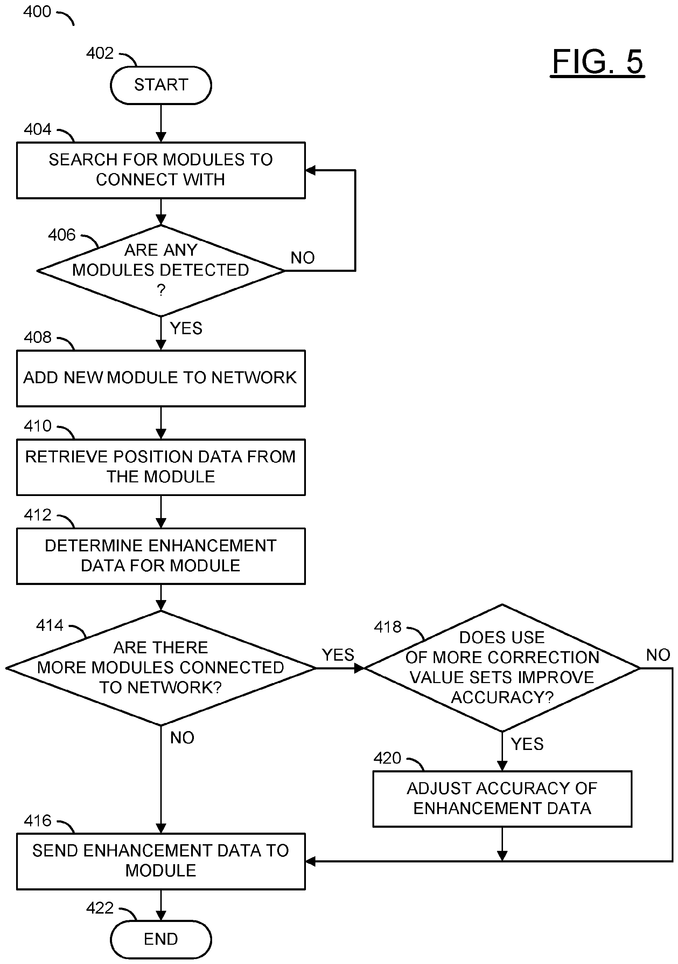

Referring to FIG. 5, a method (or process) 400 is shown. The method 400 may be an operation of a network connection portion of the module 100. The method 400 generally comprises a step (or state) 402, a step (or state) 404, a decision step (or state) 406, a step (or state) 408, a step (or state) 410, a step (or state) 412, a decision step (or state) 414, a step (or state) 416, a decision step (or state) 418, a step (or state) 420, and a step (or state) 422. The step 402 may be a start step for the method 400. The step 404 may search for modules (e.g., one of the modules 100a-100n) to connect with. Next, the method 400may move to the decision step 406.

The decision step 406 determines whether there are any modules that have been detected. If not, the method 400 moves back to the step 404. If so, the method 400 moves to the step 408. The step 408 adds a new module (e.g., one of the modules 100a-100n) to the network 54. Next, the step 410 retrieves the position data information (e.g., the position coordinates 120a) from the module. Next, the step 412 determines the enhancement data for the module. Next, the method 400 may move to the decision step 414.

The decision step 414 determines whether there are more modules connected to the network 54. If not, the method 400 moves to the step 416. The step 416 sends the enhancement data to the module. The method 400 then moves to the end step 422. If the decision step 414 determines that there are more modules connected to the network 54, the method 400 moves to the decision step 418.

The decision step 418 determines whether the use of more correction value sets improve accuracy. If not, the method 400 moves to the step 416. For example, if the module 100b provides the same correction value as the module 100c then the additional correction value may not improve accuracy of the enhancement data. If the decision step 418 determines that the use of more correction value sets does improve accuracy, the method 400 may move to the step 420. The step 420 adjusts the accuracy of the enhancement data. Next, the method 400 moves to the step 416.

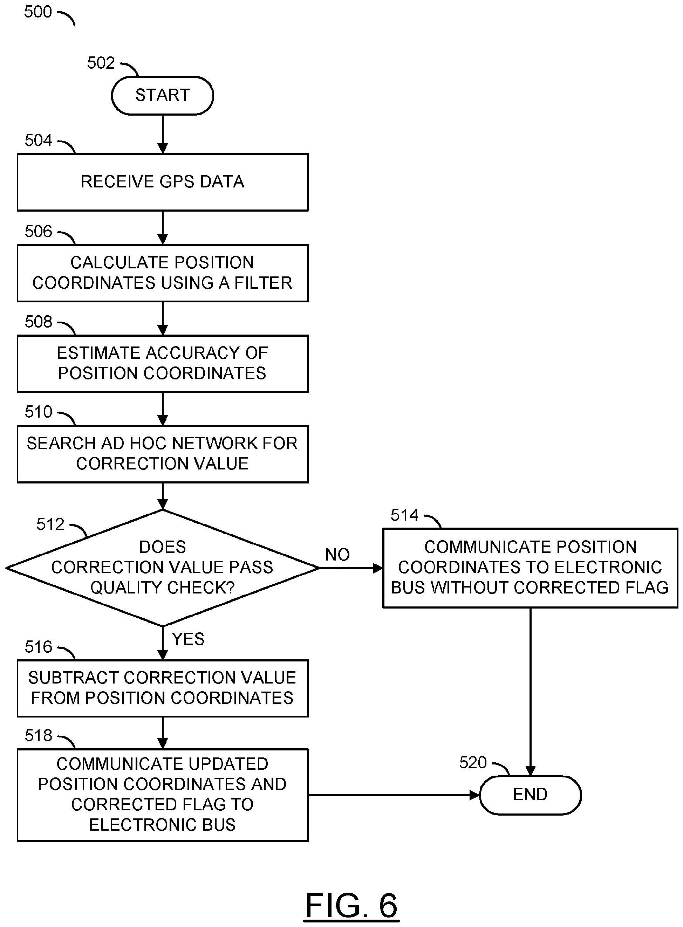

Referring to FIG. 6, a method (or process) 500 is shown. The method 500 may calculate the correction value. The method 500 generally comprises a step (or state) 502, a step (or state) 504, a step (or state) 506, a step (or state) 508, a step (or state) 510, a decision step (or state) 512, a step (or state) 514, a step (or state) 516, a step (or state) 518, and a step (or state) 520.

The step 502 may be a start step of the method 500. Next, the step 504 may receive GPS data (e.g., from the GPS satellite 56). Next, the step 506 may calculate the position coordinates 120a using the filter 114. The step 508 may estimate an accuracy of the position coordinates 120a. The step 510 may search the ad hoc network 54 for the correction value 120d. Next, the method 500 may move to the decision step 512.

The decision step 512 may determine whether the correction value 120d passes a quality check. If not, the method 500 may move to the step 514. If so, the method 500 may move to the step 516. The step 514 may communicate the position coordinates 120a to the electronic bus 70 without a corrected flag. Next, the method 500 may end at the step 520. The step 516 may subtract the correction value 120a from the position coordinates 120a. Next, the step 518 may communicate the updated position coordinates 120a and a corrected flag to the electronic bus 70. Next, the method 500 may end at the step 520.

The module 100a may send a corrected flag to the electronic bus 70. The corrected flag maybe implemented as an indicator (e.g., abit, an instruction, a signal, etc.). The corrected flag may indicate whether the position coordinates 120a have been corrected using the correction value 120d. For example, if the corrected flag is set, other components using the position coordinates 120a communicated by the module 100a may assume that the position coordinates 120a have an improved accuracy (e.g., the correction value 120d has been applied). In another example, if the corrected flag is no set, other components using the position coordinates 120a communicated by the module 100a may assume that the position coordinates 120a do not have an improved accuracy (e.g., the correction value 120d has not been applied). In some embodiments, particular features may depend on a state of the corrected flag and the features may be disabled when the corrected flag is not set. The implementation of the corrected flag may be varied according to the design criteria of a particular implementation.

In some embodiments, the modules 100a-100n may be distributed to various locations. For example, the modules 100a-100n may be installed at the base stations 58. Distributing the modules 100a-100n may be used to create a proprietary positioning network. The modules 100a-100n may be installed at the various locations by using an existing power source (e.g., a power source available in a cell tower, a power source for street lights, a power source at various landmarks, etc.). For example, the modules 100a-100n may be installed in boats and/or on buoys to provide improved position accuracy on water. The distribution of the modules 100a-100n may be varied according to the design criteria of a particular implementation.

In some embodiments, the modules 100a-100n may not be able to retrieve the correction value 120d that passes the quality check. For example, none of the nearby modules 100a-100n (e.g., the reference devices) may be able to provide reliable information (e.g., the time stamp 120c may be too old). In another example, there may be no nearby modules 100a-100n or fixed base stations 58 to act as the reference device. When there is no correction value 120d that passes the quality check, the modules 100a-100n may continue to use the GPS data (e.g., the position coordinates 120a retrieved from the satellite 56). For example, the corrected flag may not be set when sent with the position coordinates 120a. In some embodiments, the modules 1 00a-100n may prevent (e.g., shut down, disable, etc.) some functionality (e.g., of the vehicles 52a-52n) related to position accuracy when there is no correction value 120d that passes the quality check. For example, autonomous driving may become unavailable because the level of accuracy for safe performance is not available.

The modules 100a-100n may be configured to perform functionality of the reference device (e.g., calculating the correction values 120d for the modules 100a-100n of the network 54) and/or determine position data (e.g., retrieve position coordinates 120a from the GPS satellite 56 and/or the correction values 120d in order to calculate a position). For example, when the modules 100a-100n are stationary (e.g., the vehicles 52a-52n are parked and/or idling) the modules 100a-100n may perform the functionality of the reference device. The modules 100a-100n that are performing the functionality of the reference device maybe configured to calculate the correction values 120d for the other modules 100a-100n in the network 54. In another example, when the modules 100a-100n are in motion the modules 100a-100n may retrieve the position coordinates 120a from the satellite 56 and/or receive the correction value 120d from the network 54 to determine precise position data.

The modules (e.g., RTK type receivers) 100a-100n located on the vehicles 52a-52n may provide access to the network 54 (e.g., cloud, internet, wireless system, cellular system, etc.). Each of the modules 100a-100n may be configured to calculate a position and/or broadcast data such as the positional coordinates 120a, the ID number 120b, an age of the data (e.g., when the data was last updated such as the time stamp 120c), the correction value 120d and/or other data 120n. When one of the modules 100a-100n is not in motion, the module not in motion may calculate and/or provide enhanced data (e.g., the correction value 120d) configured to be used by the other modules 100a-100n on the network 54.

The enhanced data may be used for aiding (e.g., calculating a real-time accuracy correction) in a determination of position accuracy for the vehicles 52a-52n within a fixed distance (e.g., typically up to 15km). As more of the modules 100a-100-n are present in a given area, better coverage of the enhancement data and/or formation of the network 54 may result. For example, the vehicles 52a-52n may form a local mesh network to share the vehicle position data 112 without connecting to a wide-area network (e.g., the internet and/or a cellular system of a particular service provider). Each of the vehicles 52a-52n may have a module (e.g., one of the modules 100a-100n) capable of calculating the enhancement data for use within the vehicles 52a-52n and/or via the network 54. The level of improvement of the position accuracy may be based on a density and/or quality of the correction data 120d in any location on the wireless network 54. For example, having more of the modules 100a-100n in a particular range may improve the quality of the correction data for each of the modules 100a-100n in the particular range.

The modules 100a-100n may be used to enhance the precision of position data for a GPS/GNSS satellite based system. The modules 100a-100n may be configured to use a phase and carrier wave from a fixed reference device (e.g., the base station 58 and/or a stationary one of the vehicles 52a-52n acting as a reference device) to provide real-time corrections and/or enhancements to determine the position solution.

Themodules 100a-100n may be implemented to publish the vehicle position data 112 to the electronic bus 70. For example, the vehicle position data 112 may be made available to multiple components such as navigation and/or automatic emergency services. The vehicle position data 112 may comprise latitude, longitude and height, speed over ground information, time information, and/or a heading. For example, the vehicle position data 112 may be transmitted when an emergency call (e.g., eCall) is triggered (e.g., due to an impact detection and/or airbag deployment). In another example, the vehicle position data 112 may be converted to a compass bearing and published to the electronic bus 70. A compass bearing and/or location based information may be displayed to an infotainment module and/or a user device.

The functions performed by the diagrams of FIGS. 3-6 may be implemented using one or more of a conventional general purpose processor, digital computer, microprocessor, microcontroller, RISC (reduced instruction set computer) processor, CISC (complex instruction set computer) processor, SIMD (single instruction multiple data) processor, signal processor, central processing unit (CPU), arithmetic logic unit (ALU), video digital signal processor (VDSP) and/or similar computational machines, programmed according to the teachings of the specification, as will be apparent to those skilled in the relevant art(s). Appropriate software, firmware, coding, routines, instructions, opcodes, microcode, and/or program modules may readily be prepared by skilled programmers based on the teachings of the disclosure, as will also be apparent to those skilled in the relevant art(s). The software is generally executed from a medium or several media by one or more of the processors of the machine implementation.

The invention may also be implemented by the preparation of ASICs (application specific integrated circuits), Platform ASICs, FPGAs (field programmable gate arrays), PLDs (programmable logic devices), CPLDs (complex programmable logic devices), sea-of-gates, RFICs (radio frequency integrated circuits), ASSPs (application specific standard products), one or more monolithic integrated circuits, one or more chips or die arranged as flip-chip modules and/or multi-chip modules or by interconnecting an appropriate network of conventional component circuits, as is described herein, modifications of which will be readily apparent to those skilled in the art(s).

The invention thus may also include a computer product which may be a storage medium or media and/or a transmission medium or media including instructions which may be used to program a machine to perform one or more processes or methods in accordance with the invention. Execution of instructions contained in the computer product by the machine, along with operations of surrounding circuitry, may transform input data into one or more files on the storage medium and/or one or more output signals representative of a physical object or substance, such as an audio and/or visual depiction. The storage medium may include, but is not limited to, any type of disk including floppy disk, hard drive, magnetic disk, optical disk, CD-ROM, DVD and magnetooptical disks and circuits such as ROMs (read-only memories), RAMs (random access memories), EPROMs (erasable programmable ROMs), EEPROMs (electrically erasable programmable ROMs), UVPROM (ultra-violet erasable programmable ROMs), Flash memory, magnetic cards, optical cards, and/or any type of media suitable for storing electronic instructions.

The elements of the invention may form part or all of one or more devices, units, components, systems, machines and/or apparatuses. The devices may include, but are not limited to, servers, workstations, storage array controllers, storage systems, personal computers, laptop computers, notebook computers, palm computers, personal digital assistants, portable electronic devices, battery powered devices, set-top boxes, encoders, decoders, transcoders, compressors, decompressors, pre-processors, post-processors, transmitters, receivers, transceivers, cipher circuits, cellular telephones, digital cameras, positioning and/or navigation systems, medical equipment, heads-up displays, wireless devices, audio recording, audio storage and/or audio playback devices, video recording, video storage and/or video playback devices, game platforms, peripherals and/or multi-chip modules. Those skilled in the relevant art(s) would understand that the elements of the invention may be implemented in other types of devices to meet the criteria of a particular application.

## Claims

1. An apparatus comprising (52a):
an antenna (104) configured to connect to a wireless network (54) and a GPS satellite (56);
a processor (102) configured to execute instructions; and
a memory (106) configured to store said instructions that, when executed, cause the apparatus to perform the steps of locating a first module (52b) of a first vehicle (100b) connected to said wireless network, wherein said locating is based on first vehicle position data provided by said first module, wherein said first module of the first vehicle is stationary, said first module of the first vehicle (100b) having a first identification code (120b) and a first correction value (120d), wherein said first correction value improves the accuracy of position coordinates (120a) of said apparatus, wherein said position coordinates (120a) store position data retrieved by said apparatus from said GPS satellite, determining whether said first correction value passes a quality check, **characterised in that** the apparatus further performs the step of:
determining (414) whether at least a second module (52n) of a second vehicle (100n) is connected to the wireless network (54), wherein said second module of the second vehicle is stationary, wherein the second module of the second vehicle having a second identification code and second correction value, wherein said second correction value improves the accuracy of said position coordinates (120a) of said apparatus; when if there is said at least second module then:
determining whether said second correction value passes said quality check,
testing the first and second correction value and determining a most accurate estimation,
and if said first and second correction value pass said quality check, using the correction value determined to be the most accurate estimation to compensate for local conditions that affect an accuracy of said position coordinates (120a) when connecting to said GPS satellite.

2. The apparatus according to claim 1, wherein said wireless network comprises a cellular network.

3. The apparatus according to any of claims 1 to 2, wherein said quality check comprises checking a location of said module and a time since an update of said correction value.

4. The apparatus according to claim 3, wherein said apparatus uses said correction value when said location is less than a minimum allowed distance.

5. The apparatus according to claim 3 or 4, wherein said apparatus uses said correction value when said time since said update of said correction value is below a pre-determined threshold.

6. The apparatus according to any of claims 1 to 5, wherein said apparatus is located in a vehicle.

7. The apparatus according to any of claims 1 to 6, wherein said module is located in a parked vehicle.

8. The apparatus according any of claims 1 to 7, wherein said module is located in an idling vehicle.

9. The apparatus according any of claims 1 to 8, wherein said apparatus continues to use GPS data received from said GPS satellite if said first and second correction values fail said quality check.

10. The apparatus according to any of claim 1 to 9, wherein said apparatus is configured to (i) perform functionality of said module in a first mode and (ii) determine position data in a second mode.

11. The apparatus according to claim 10, wherein said functionality of said module comprises calculating said correction value for other of said apparatus on said network.

12. The apparatus according to claim 10 or 11, wherein said position data is based on said connection to said GPS satellite and said correction value.

13. The apparatus according to any of claims 1 to 12, wherein said correction value implements a real-time accuracy correction for vehicle positioning.

14. The apparatus of claim 10, wherein the apparatus is configured to switch from the second mode into the first mode when the vehicle is stationary.

## Patentansprüche

1. Vorrichtung, umfassend (52a):
eine Antenne (104), die konfiguriert ist, um ein Drahtlosnetzwerk (54) und einen GPS-Satelliten (56) zu verbinden;
einen Prozessor (102), der konfiguriert ist, um Anweisungen auszuführen; und
einen Speicher (106), der konfiguriert ist, um die Anweisungen zu speichern, die bei Ausführung die Vorrichtung veranlassen, die Schritte des Lokalisierens eines ersten Moduls (52b) eines ersten Fahrzeugs (100b), das mit dem Drahtlosnetzwerk verbunden ist, wobei das Lokalisieren auf von dem ersten Modul bereitgestellten Positionsdaten des ersten Fahrzeugs basiert, wobei das erste Modul des ersten Fahrzeugs stationär ist, wobei das erste Modul des ersten Fahrzeugs (100b) einen ersten Identifikationscode (120b) und einen ersten Korrekturwert (120d) aufweist, wobei der erste Korrekturwert die Genauigkeit der Positionskoordinaten (120a) der Vorrichtung verbessert, wobei die Positionskoordinaten (120a) durch die Vorrichtung von dem GPS-Satelliten abgerufene Positionsdaten speichern,
und des Bestimmens, ob der erste Korrekturwert eine Qualitätsprüfung besteht, auszuführen, **dadurch gekennzeichnet, dass** die Vorrichtung weiters die folgenden Schritte ausführt:
Bestimmen (414), ob zumindest ein zweites Modul (52n) eines zweiten Fahrzeugs (100n) mit dem Drahtlosnetzwerk (54) verbunden ist, wobei das zweite Modul des zweiten Fahrzeugs stationär ist, wobei das zweite Modul des zweiten Fahrzeugs einen zweiten Identifikationscode und einen zweiten Korrekturwert aufweist, wobei der zweite Korrekturwert die Genauigkeit der Positionskoordinaten (120a) der Vorrichtung verbessert;
wenn das genannte zumindest zweite Modul vorhanden ist, dann:
Bestimmen, ob der zweite Korrekturwert die Qualitätsprüfung besteht,
Testen des ersten und zweiten Korrekturwerts und Bestimmen einer möglichst genauen Schätzung,
und, wenn der erste und zweite Korrekturwert die Qualitätsprüfung bestehen, Verwenden des Korrekturwerts, der als genaueste Schätzung bestimmt wurde, zur Kompensation von lokalen Bedingungen, die sich auf die Genauigkeit der Positionskoordinaten (120a) auswirken, wenn mit dem GPS-Satelliten verbunden wird.

2. Vorrichtung nach Anspruch 1, wobei das Drahtlosnetzwerk ein Mobilfunk-Netzwerk umfasst.

3. Vorrichtung nach einem der Ansprüche 1 bis 2, wobei die Qualitätsprüfung das Prüfen einer Position des Moduls und einer Zeit seit einer Aktualisierung des Korrekturwerts umfasst.

4. Vorrichtung nach Anspruch 3, wobei die Vorrichtung den Korrekturwert verwendet, wenn die Position weniger als einen erlaubten Mindestabstand entfernt ist.

5. Vorrichtung nach Anspruch 3 oder 4, wobei die Vorrichtung den Korrekturwert verwendet, wenn die Zeit seit der Aktualisierung des Korrekturwerts unter einer vorbestimmten Schwelle liegt.

6. Vorrichtung nach einem der Ansprüche 1 bis 5, wobei sich die Vorrichtung in einem Fahrzeug befindet.

7. Vorrichtung nach einem der Ansprüche 1 bis 6, wobei sich das Modul in einem geparkten Fahrzeug befindet.

8. Vorrichtung nach einem der Ansprüche 1 bis 7, wobei sich das Modul in einem Fahrzeug im Leerlauf befindet.

9. Vorrichtung nach einem der Ansprüche 1 bis 8, wobei die Vorrichtung fortfährt, die von dem GPS-Satelliten empfangenen GPS-Daten zu verwenden, wenn der erste und der zweite Korrekturwert die Qualitätsprüfung nicht bestehen.

10. Vorrichtung nach einem der Ansprüche 1 bis 9, wobei die Vorrichtung konfiguriert ist, um (i) in einem ersten Modus eine Funktionalität des Moduls auszuführen und (ii) in einem zweiten Modus Positionsdaten zu bestimmen.

11. Vorrichtung nach Anspruch 10, wobei die Funktionalität des Moduls das Berechnen des Korrekturwerts für eine andere solche Vorrichtung im Netzwerk umfasst.

12. Vorrichtung nach Anspruch 10 oder 11, wobei die Positionsdaten auf der Verbindung mit dem GPS-Satelliten und dem Korrekturwert basieren.

13. Vorrichtung nach einem der Ansprüche 1 bis 12, wobei der Korrekturwert eine Echtzeitgenauigkeitskorrektur der Fahrzeugposition vornimmt.

14. Vorrichtung nach Anspruch 10, wobei die Vorrichtung konfiguriert ist, um vom zweiten Modus in den ersten Modus zu wechseln, wenn das Fahrzeug stationär ist.

## Revendications

1. Appareil comprenant (52a) :
une antenne (104) configurée pour se connecter à un réseau sans fil (54) et à un satellite GPS (56) ;
un processeur (102) configuré pour exécuter des instructions ; et
une mémoire (106) configurée pour stocker lesdites instructions qui, lorsqu'elles sont exécutées, amènent l'appareil à exécuter les étapes de localisation d'un premier module (52b) d'un premier véhicule (100b) connecté audit réseau sans fil, dans lequel ladite localisation est basée sur des premières données de position de véhicule fournies par ledit premier module, dans lequel ledit premier module du premier véhicule est stationnaire, ledit premier module du premier véhicule (100b) ayant un premier code d'identification (120b) et une première valeur de correction (120d), dans lequel ladite première valeur de correction améliore la précision de coordonnées de position (120a) dudit appareil, dans lequel lesdites coordonnées de position (120a) stockent des données de position récupérées par ledit appareil à partir dudit satellite GPS, déterminant si ladite première valeur de correction passe un contrôle de qualité, **caractérisé en ce que** l'appareil exécute en outre l'étape consistant à :
déterminer (414) si au moins un second module (52n) d'un second véhicule (100n) est connecté au réseau sans fil (54), dans lequel ledit second module du second véhicule est stationnaire, dans lequel le second module du second véhicule a un second code d'identification et une seconde valeur de correction, dans lequel ladite seconde valeur de correction améliore la précision desdites coordonnées de position (120a) dudit appareil ;
lorsqu'il y a ledit au moins second module, alors :
déterminer si ladite seconde valeur de correction passe ledit contrôle de qualité,
tester les première et seconde valeurs de correction et déterminer une estimation la plus précise,
et si lesdites première et seconde valeurs de correction passent ledit contrôle de qualité, utiliser la valeur de correction déterminée comme étant l'estimation la plus précise pour compenser des conditions locales qui affectent une précision desdites coordonnées de position (120a) lors d'une connexion audit satellite GPS.

2. Appareil selon la revendication 1, dans lequel ledit réseau sans fil comprend un réseau cellulaire.

3. Appareil selon l'une quelconque des revendications 1 à 2, dans lequel ledit contrôle de qualité comprend un contrôle d'un emplacement dudit module et d'un temps depuis une mise à jour de ladite valeur de correction.

4. Appareil selon la revendication 3, dans lequel ledit appareil utilise ladite valeur de correction lorsque ledit emplacement est inférieur à une distance minimale autorisée.

5. Appareil selon la revendication 3 ou 4, dans lequel ledit appareil utilise ladite valeur de correction lorsque ledit temps depuis ladite mise à jour de ladite valeur de correction est inférieur à un seuil prédéterminé.

6. Appareil selon l'une quelconque des revendications 1 à 5, dans lequel ledit appareil est situé dans un véhicule.

7. Appareil selon l'une quelconque des revendications 1 à 6, dans lequel ledit module est situé dans un véhicule en stationnement.

8. Appareil selon l'une quelconque des revendications 1 à 7, dans lequel ledit module est situé dans un véhicule au ralenti.

9. Appareil selon l'une quelconque des revendications 1 à 8, dans lequel ledit appareil continue d'utiliser les données GPS reçues dudit satellite GPS si lesdites première et seconde valeurs de correction échouent audit contrôle de qualité.

10. Appareil selon l'une quelconque des revendications 1 à 9, dans lequel ledit appareil est configuré pour (i) exécuter une fonctionnalité dudit module dans un premier mode et (ii) déterminer des données de position dans un second mode.

11. Appareil selon la revendication 10, dans lequel ladite fonctionnalité dudit module comprend le calcul de ladite valeur de correction pour l'autre desdits appareils sur ledit réseau.

12. Appareil selon la revendication 10 ou 11, dans lequel lesdites données de position sont basées sur ladite connexion audit satellite GPS et ladite valeur de correction.

13. Appareil selon l'une quelconque des revendications 1 à 12, dans lequel ladite valeur de correction met en œuvre une correction de précision en temps réel pour un positionnement de véhicule.

14. Appareil selon la revendication 10, dans lequel l'appareil est configuré pour passer du second mode au premier mode lorsque le véhicule est stationnaire.
